(19) Europäisches Patentamt / European Patent Office / Office européen des brevets

(11) **EP 4 583 197 A1**

(12) **EUROPEAN PATENT APPLICATION**
published in accordance with Art. 153(4) EPC

(43) Date of publication:
**09.07.2025 Bulletin 2025/28**

(21) Application number: **23896716.0**

(22) Date of filing: **27.11.2023**

(51) International Patent Classification (IPC):
**H01M 4/36** (2006.01)  **H01M 4/136** (2010.01)
**H01M 4/525** (2010.01)  **H01M 4/58** (2010.01)
**H01M 10/0525** (2010.01)

(52) Cooperative Patent Classification (CPC):
**H01M 4/136; H01M 4/36; H01M 4/525; H01M 4/58; H01M 10/0525; Y02E 60/10**

(86) International application number:
**PCT/CN2023/134282**

(87) International publication number:
**WO 2024/114565 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.11.2022  CN 202211505245**

(71) Applicant: **BatteroTech Co., Ltd**
**Jiaxing, Zhejiang 314100 (CN)**

(72) Inventor: **REN, Ruili**
**Shanghai 201417 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **POSITIVE ELECTRODE MATERIAL AND PREPARATION METHOD THEREFOR, AND POSITIVE ELECTRODE PLATE, BATTERY AND APPARATUS**

(57)    Provided are a positive electrode material, a preparation method thereof, a positive electrode plate, a battery and an apparatus. The positive electrode material includes a positive electrode active substance, the positive electrode active substance including a first component and a second component. The heat stability of the first component is higher than that of the second component, and the positive electrode material meets the following formula:

$$\alpha = \left( W_1 \times \left( \frac{448}{C1 \times U1} \right)^{\frac{1}{2}} + W_2 \times \frac{709}{C2 \times U2} \right) \left( W_1 + \frac{T \times W_2}{350} \right)$$

, wherein, $\alpha$ is a characteristic parameter of the positive electrode material, $W_1$ is a mass ratio of the first component to the positive electrode active substance, $W_2$ is a mass ratio of the second component to the positive electrode active substance, C1 is a gram capacity of the first component, C2 is a gram capacity of the second component, U1 is a working voltage of the first component, U2 is a working voltage of the second component, T is a temperature at an exothermic peak of the second component in differential scanning calorimetry characterization, $0.8 \le \alpha \le 1.03$. According to the embodiment of the present disclosure, by mixing the first component with higher heat stability and the second component with lower heat stability, the heat stability of the positive electrode material can be improved, so that higher safety performance is obtained.

01

100
200
100

Fig. 1

EP 4 583 197 A1

## Description

This application claims the priority of Chinese patent application No. 202211505245.0 filed on November 28, 2022, the disclosure of which is hereby incorporated in its entirety as a part of this application.

## Technical Field

Embodiments of the present disclosure relate to a positive electrode material, a preparation method thereof, a positive electrode plate, a battery, and an apparatus.

## Background

Lithium-ion batteries have the characteristics of high working voltage, large specific energy, long cycle life and no memory effect, etc., and are widely used in various fields, such as power systems of new energy vehicles. Safety and energy density, as key indicators of power lithium-ion batteries, have become a research focus in a process of industrialization of lithium-ion batteries. On the premise of giving consideration to energy density, it is a matter of urgency to provide a lithium-ion battery with high safety performance.

## Summary

At least one embodiment of the present disclosure relates to a positive electrode material, a positive electrode plate including the positive electrode material, a battery including the positive electrode plate, an apparatus including the battery and a preparation method of the positive electrode material.

At least one embodiment of the present disclosure provides a positive electrode material including a positive electrode active substance, wherein the positive electrode active substance includes a first component and a second component, the heat stability of the first component is higher than that of the second component, and the positive electrode material meets the following formula:

$$\alpha = \left(W_1 \times \left(\frac{448}{C1 \times U1}\right)^{\frac{1}{2}} + W_2 \times \frac{709}{C2 \times U2}\right)\left(W_1 + \frac{T \times W_2}{350}\right),$$

wherein, $\alpha$ is a characteristic parameter of the positive electrode material, $W_1$ is a mass ratio of the first component to the positive electrode active substance, $W_2$ is a mass ratio of the second component to the positive electrode active substance, C1 is a gram capacity of the first component, C2 is a gram capacity of the second component, the units of C1 and C2 are mA·h/g, U1 is a working voltage of the first component, U2 is a working voltage of the second component, the units of U1 and U2 are V, T is a temperature at an exothermic peak of the second component in differential scanning calorimetry characterization, and the unit of T is °C, wherein $0.8 \leq \alpha \leq 1.03$.

For example, in the positive electrode material provided by at least one embodiment of the present disclosure, the temperature of the first component at the exothermic peak in differential scanning calorimetry characterization is greater than 306°C, and the temperature of the second component at the exothermic peak in differential scanning calorimetry characterization is less than or equal to 306°C.

For example, in the positive electrode material provided by at least one embodiment of the present disclosure, the gram capacity of the first component is less than 150 mA·h/g, and the gram capacity of the second component is greater than or equal to 150 mA·h/g.

For example, in the positive electrode material provided by at least one embodiment of the present disclosure, the first component includes at least one of an olivine material and a spinel material; and the second component includes a layered structure material, and the layered structure material includes at least one of a ternary material, lithium cobalt oxides and lithium nickelate.

For example, in the positive electrode material provided by at least one embodiment of the present disclosure, the first component includes at least one of lithium iron phosphate, lithium manganese iron phosphate and lithium manganate.

For example, in the positive electrode material provided by at least one embodiment of the present disclosure, a mass ratio of the positive electrode active substance to the positive electrode material is 90wt%-98wt%, a mass ratio of the first component to the positive electrode material is 45wt%-49wt%, and a mass ratio of the second component to the positive electrode material is 45wt%-49wt%.

For example, the positive electrode material provided by at least one embodiment of the present disclosure further includes a positive electrode conductive agent and a positive electrode binder, where a mass ratio of the positive electrode conductive agent to the positive electrode material is 1wt%-5wt%; and a mass ratio of the positive electrode binder to the positive electrode material is 1wt%-5wt%.

For example, in the positive electrode material provided by at least one embodiment of the present disclosure, the first component includes $LiMn_xFe_{(1-x)}PO_4$, and $0 \leq x \leq 0.6$, the gram capacity C1 of the first component is 140 mA·h/g to 160 mA·h/g, and the working voltage U1 of the first component is 3.2 V or 4.0 V.

For example, in the positive electrode material provided by at least one embodiment of the present disclosure, the second component includes $LiNi_zMn_yCo_{(1-z-y)}O_2$, and $0<z<1$, $0<y<1$, $0< 1-z-y<1$; the gram capacity C2 of the second component is 150 mA·h/g to 220 mA·h/g, and the working voltage U2 of the second component is 3.6 V to 3.75 V.

At least one embodiment of the present disclosure also provides a positive electrode plate, including the positive electrode material described in any one of the embodiments above.

At least one embodiment of the present disclosure also provides a battery including the positive electrode plate as described above.

At least one embodiment of the present disclosure also provides an apparatus, including the above-mentioned battery, where the battery is configured as a power source for the apparatus.

At least one embodiment of the present disclosure also provides a preparation method of a positive electrode material, including mixing a first component and a second component to prepare a positive electrode active substance, wherein the heat stability of the first component is higher than that of the second component, and the positive electrode active substance meets the following formula:

$$\alpha = \left(W_1 \times \left(\frac{448}{C1 \times U1}\right)^{\frac{1}{2}} + W_2 \times \frac{709}{C2 \times U2}\right)\left(W_1 + \frac{T \times W_2}{350}\right),$$

where, $\alpha$ is a characteristic parameter of the positive electrode material, $W_1$ is a mass ratio of the first component to the positive electrode active substance, $W_2$ is a mass ratio of the second component to the positive electrode active substance, C1 is a gram capacity of the first component, C2 is a gram capacity of the second component, the units of C1 and C2 are mA·h/g, U1 is a working voltage of the first component, U2 is a working voltage of the second component, the units of U1 and U2 are V, T is a temperature at an exothermic peak of the second component in differential scanning calorimetry characterization, and the unit of T is °C, where $0.8 \leq \alpha \leq 1.03$.

For example, in the preparation method of the positive electrode material provided by at least one embodiment of the present disclosure, the temperature of the first component at the exothermic peak in differential scanning calorimetry characterization is greater than 306°C, and the temperature of the second component at the exothermic peak in differential scanning calorimetry characterization is less than or equal to 306°C.

For example, in the preparation method of the positive electrode material provided by at least one embodiment of the present disclosure, the gram capacity of the first component is less than 150 mA·h/g, and the gram capacity of the second component is greater than or equal to 150 mA·h/g.

For example, in the preparation method of the positive electrode material provided by at least one embodiment of the present disclosure, a mass ratio of the positive electrode active substance to the positive electrode material is 90wt%-98wt%, a mass ratio of the first component to the positive electrode material is 45wt%-49wt%, and a mass ratio of the second component to the positive electrode material is 45wt%-49wt%.

## Brief Description of the Drawings

In order to explain the technical solutions of the embodiments of the present disclosure more clearly, the attached drawings of the embodiments will be briefly introduced below. Obviously, the attached drawings in the following description only involve some embodiments of the present disclosure, and are not intended to limit the present disclosure.

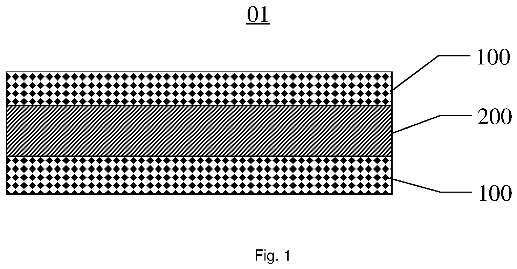

Fig. 1 is a schematic structural diagram of a positive electrode plate provided by an embodiment of the present disclosure.

## Detailed Description of the Embodiments

In order to make the purposes, technical solutions and advantages of the embodiments of the present disclosure more clear, the technical solutions of the embodiments of the present disclosure will be described clearly and completely below in conjunction with the drawings of the embodiment of the present disclosure. Apparently, the described embodiments are some embodiments of the present disclosure, but not all embodiments. All other embodiments, obtained by those of ordinary skill in the art based on the embodiments of the present disclosure without any inventive efforts, fall within the protection scope of the present disclosure.

Unless otherwise defined, technical or scientific terms used in the present disclosure should have their ordinary meanings as understood by one of ordinary skill in the art to which the present disclosure belongs. The terms "first", "second", and the like, as used in the present disclosure, do not denote any order, quantity, or importance, but rather are used to distinguish one element from another. Similarly, the terms "comprising" or "including" and the like mean that elements or articles mentioned before the word encompass elements or articles listed after the word and their equivalents, without excluding other elements or articles.

At present, positive electrode materials of lithium ion batteries include lithium iron phosphate materials and ternary materials. For example, in ternary Ni-Co-Mn materials, since nickel has high gram capacity and high voltage platform, it has obvious advantages over lithium iron phosphate in improving the energy density, which can better meet the needs of people for long endurance mileage during travel. However, the ternary materials have the defects of poor structural and interfacial stability themselves, and due to their active properties, the ternary materials easily undergo redox reactions with electrolyte solvents. Meanwhile, a decomposition temperature of the ternary material is 200°C, and its exothermic energy exceeds 800 J/g. A decomposition temperature of lithium iron phosphate is 400°C, and its exothermic energy is only 124 J/g. Therefore, compared with a battery made of lithium iron phosphate, a ternary lithium battery has poor safety, and is prone to spontaneous combustion, explosion and other thermal runaway phenomena, which seriously restricts further promotion and application of new energy vehicles.

Thus, building a battery system with high energy density and high safety has become a hot spot and focus of lithium battery research. In order to solve the problem of poor safety of lithium batteries mentioned above, doping, surface coating and other means are used to modify ternary materials in related research. For example, the structural stability and heat stability of $LiNi_{0.8}Co_{0.1}Mn_{0.1}O_2$ doped with Mg and Al elements are better than those undoped materials or those materials doped with a single element. For example, electrochemical inert substances used for surface coating mainly include oxides, fluorides and high molecular polymers. However, although these technical means improve the heat stability of ternary materials, their preparation technologies are complex, the cost is high and the consistency of materials is difficult to control.

At least one embodiment of the present disclosure provides a positive electrode material including a positive electrode active substance. The positive electrode active substance includes a first component and a second component, the heat stability of the first component is higher than that of the second component, and the positive electrode material meets the following formula:

$$\alpha = \left(W_1 \times \left(\frac{448}{C1 \times U1}\right)^{\frac{1}{2}} + W_2 \times \frac{709}{C2 \times U2}\right)\left(W_1 + \frac{T \times W_2}{350}\right),$$

wherein, $\alpha$ is a characteristic parameter of the positive electrode material, $W_1$ is a mass ratio of the first component to the positive electrode active substance, $W_2$ is a mass ratio of the second component to the positive electrode active substance, C1 is a gram capacity of the first component, C2 is a gram capacity of the second component, the units of C1 and C2 are mA·h/g, U1 is a working voltage of the first component, U2 is a working voltage of the second component, the units of U1 and U2 are volts (V), T is a temperature at an exothermic peak of the second component in differential scanning calorimetry characterization, and the unit of T is degree centigrade (°C).

In this positive electrode material, $0.8 \leq \alpha \leq 1.03$.

The positive electrode active substance in the positive electrode material is divided into two components, which can simplify the complexity and facilitate the classification and selection among many positive electrode active substances.

According to the embodiment of the present disclosure, by mixing the second component with lower heat stability and the first component with higher heat stability, the heat stability of the positive electrode material can be improved, so that the safety performance is higher; and the technical solution is low in cost and easy to implement.

The positive electrode material, a positive electrode plate including the positive electrode material, a battery including the positive electrode plate, an apparatus including the battery and a preparation method of the positive electrode material will be described with reference to the attached drawings and through some embodiments.

At least one embodiment of the present disclosure provides a positive electrode material. The positive electrode material includes a positive electrode active substance. The positive electrode active substance includes a first component and a second component, and the heat stability of the first component is higher than that of the second component. The positive electrode material meets the following formula:

$$\alpha = \left(W_1 \times \left(\frac{448}{C1 \times U1}\right)^{\frac{1}{2}} + W_2 \times \frac{709}{C2 \times U2}\right)\left(W_1 + \frac{T \times W_2}{350}\right),$$

wherein, $\alpha$ is a characteristic parameter of the positive electrode material, $W_1$ is a mass ratio of the first component to the positive electrode active substance, $W_2$ is a mass ratio of the second component to the positive electrode active substance, C1 is a gram capacity of the first component, C2 is a gram capacity of the second component, the units of C1 and C2 are mA·h/g, U1 is a working voltage of the first component, U2 is a working voltage of the second component, the units of U1 and U2 are V, T is a temperature at an exothermic peak of the second component in differential scanning calorimetry characterization, and the unit of T is °C.

In this positive electrode material, $0.8 \leq \alpha \leq 1.03$.

For example, the positive electrode material provided by the embodiment of the present disclosure can be used for secondary batteries. For example, it can be used for lithium ion batteries, but it is not limited thereto.

In the positive electrode material provided by the embodiment of the present disclosure, in order to facilitate obtaining the battery with high heat stability and reducing the probability of thermal runaway when the battery including the positive electrode material is mechanically abused, the positive electrode active substance in the positive electrode material is divided into two components, namely the first component and the second component, and the positive electrode active substances of the two components can make up for each other in terms of heat stability; and through characteristic ratios, the mass ratios of the first component and the second component to the positive electrode active substance, the gram capacitys of the first component and the second component, the working voltages of the first component and the second component, and the temperature of the second component at the exothermic peak in differential scanning calorimetry characterization, the formula is constructed, such that the positive electrode material with its components and contents meeting the characteristic ratio $\alpha$ in the formula is a positive electrode material that meets the requirements. According to the embodiments of the present disclosure, the suitable positive electrode material is provided for obtaining the battery with high heat stability and reducing the probability of thermal runaway when the battery including the positive electrode material is mechanically abused. In this formula, all parameters are linked, and when the characteristic ratio meets the requirement that $0.8 \leq \alpha \leq 1.03$, it is the positive electrode material that meets the requirements.

For example, in the positive electrode material, by reasonably selecting the first component and the second component, and mixing the first component with higher heat stability into the second component with lower heat stability, the situations of heat generation and oxygen release, etc. in a battery and the probability of thermal runaway when the battery is mechanically abused can be reduced.

Thus, according to the embodiment of the present disclosure, by mixing the second component with lower heat stability and the first component with higher heat stability according to a certain proportion, the heat stability of the positive electrode material can be improved, so that higher safety performance is obtained.

For example, the temperature of the first component at the exothermic peak in differential scanning calorimetry characterization is greater than 306°C, and the temperature of the second component at the exothermic peak in differential scanning calorimetry characterization is less than or equal to 306°C. By taking the temperature at the exothermic peak in differential scanning calorimetry characterization of 306°C as a boundary, the two components in the positive electrode material can be distinguished, which is beneficial to the selection of the components and the acquisition of the contents of the components of the positive electrode material.

For example, when the component of the positive electrode active substance is determined, the temperature of the component at the exothermic peak in differential scanning calorimetry characterization is determined. That is, the temperature at the exothermic peak in differential scanning calorimetry characterization is a parameter related to the component, which is a constant value when the component is determined. In the embodiment of the present disclosure, the temperature at the exothermic peak in differential scanning calorimetry characterization is obtained by using a common differential scanning calorimeter under a corresponding national standard (GB) JB/T 6856-2017. The model of the differential scanning calorimeter used in the embodiment of the present disclosure is Mettler Toledo DSC 3+. Of course, other differential scanning calorimeters may also be used for measurement.

For example, the heat stability of the second component is lower than that of the first component, and the heat resistance of the second component is lower than that of the first component.

For example, the temperature of the first component at the exothermic peak in differential scanning calorimetry characterization is higher than 306°C, and the temperature of the second component at the exothermic peak in differential scanning calorimetry characterization can be 100°C-306°C, but it is not limited thereto. For example, the boundary between the exothermic peak temperatures of the first component and the second component is 306°C, but it is not limited thereto.

Thus, by mixing the first component and the second component according to the above formula, and allowing $\alpha$ to be greater than or equal to 0.8 and less than or equal to 1.03 in the positive electrode material, the heat stability of the positive electrode material can be improved, enabling the battery to have higher safety.

For example, in order to allow the battery to have higher heat stability, $\alpha$ can be greater than or equal to 0.8 and less than or equal to 0.9 in the positive electrode material. For example, in this positive electrode material, $\alpha$ can be greater than or equal to 0.85 and less than or equal to 0.95. For example, in the positive electrode material, $\alpha$ can be greater than or equal to 0.8 and less than or equal to 1, but it is not limited thereto.

For example, in the positive electrode material, the gram capacity of the first component is less than 150 mA·h/g, and the gram capacity of the second component is greater than or equal to 150 mA·h/g. By further defining the gram capacitys of the components in the positive electrode active substance, the positive electrode active substance is further screened, so that the boundary between the first component and the second component is more obvious.

The gram capacity of each component in the positive electrode active substance in the positive electrode material is related to the component, and the gram capacity of the component is determined when the component is determined. The gram capacity is measured under usual test conditions. In the embodiment of the present disclosure, the measurement method of the gram capacity may generally include: according to steps such as pulping, coating, drying, and tableting pressing, preparing the positive electrode material into a positive electrode plate; and assembling a button battery by using a lithium sheet as a negative electrode and injecting an electrolyte. Then, measurement is performed using current charge and discharge at 0.1C.

For example, in the positive electrode material, the energy density of the first component is less than that of the second component, and the boundary between the gram capacitys of the first component and the second component is 150 mA·h/g, but it is not limited thereto. Thus, by mixing the first component and the second component, the overall energy density of the positive electrode material can be improved, so that the energy density of the battery can be maintained at a high level.

For example, in some embodiments, the temperature of the first component at the exothermic peak in differential scanning calorimetry characterization is greater than 306°C, the temperature of the second component at the exothermic peak in differential scanning calorimetry characterization is less than or equal to 306°C, the gram capacity of the first component is less than 150 mA·h/g, and the gram capacity of the second component is greater than or equal to 150 mA·h/g. By taking the temperature at the exothermic peak in differential scanning calorimetry characterization of 306°C as the boundary, and the gram capacity of the component of 150 mA·h/g as the boundary, the positive electrode active substance is further screened. The positive electrode active substance that meets this condition is more conducive to balancing safety performance and achieving high capacity in batteries.

In the embodiment of the present disclosure, the energy density refers to a ratio of energy of the battery to its volume.

For example, in the positive electrode active substance of the positive electrode material, the first component may include at least one of an olivine material and a spinel material. The second component may include a layered structure material, and the layered structure material includes at least one of a ternary material, lithium cobalt oxides and lithium nickelate.

For example, in the positive electrode active substance of the positive electrode material, the first component may include at least one of lithium iron phosphate, lithium manganese iron phosphate and lithium manganate.

In the positive electrode active substance of the positive electrode material, the first component and the second component are reasonably selected as the above materials according to the above formula and a specific ratio, so that the battery has higher heat stability and higher safety performance.

For example, in the positive electrode material, a mass ratio of the positive electrode active substance to the positive electrode material may be 90wt%-98wt%. A mass ratio of the first component to the positive electrode material is 45wt%-49wt%, and a mass ratio of the second component to the positive electrode material is 45wt%-49wt%.

For example, the positive electrode active substance in the positive electrode material may be 90wt%-95wt%. For example, the positive electrode active substance in the positive electrode material may be 92wt%-97wt%. For example, the positive electrode active substance in the positive electrode material may be 93wt%-96wt%, but it is not limited thereto.

For example, mass ratios of the first component and the second component to the positive electrode material may be approximately equal, but it is not limited thereto.

For example, the positive electrode material may also include materials other than the positive electrode active substance, such as a positive electrode conductive agent and a positive electrode binder. For example, a mass ratio of the cathode conductive agent to the positive electrode material is 1wt%-5wt%, and a mass ratio of the positive electrode binder to the positive electrode material is 1wt%-5wt%.

For example, the positive electrode conductive agent and the positive electrode binder account for 2wt%-10wt% of the positive electrode material, so as to form the positive electrode material together with the positive electrode active substance. For example, in the positive electrode material, the contents of the positive electrode conductive agent and the positive electrode binder may be equal or approximately equal, but it is not limited thereto.

For example, in the positive electrode active substance of the positive electrode material, the first component may include $LiMn_xFe_{(1-x)}PO_4$, and $0 \leq x \leq 0.6$. The gram capacity C1 of the first component may be 140 mA·h/g to 160 mA·h/g, and the working voltage U1 of the first component may be 3.2 V or 4.0 V, but it is not limited thereto.

For example, in the positive electrode active substance of the positive electrode material, the second component may include $LiNi_zMn_yCo_{(1-z-y)}O_2$, and $0<z<1$, $0<y<1$, $0<1-z-y<1$. The gram capacity C2 of the second component is 150 mA·h/g to 220 mA·h/g, and the working voltage U2 of the second component is 3.6 V to 3.75 V, but it is not limited thereto. Further, for example, the gram capacity C2 of the second component is 170 mA·h/g to 220 mA·h/g.

For example, a particle size of the first component is smaller than that of the second component. The first component with the small particle size may be mixed with and distributed among particles of the second component, so that a chain reaction of the second component can be inhibited under a condition of thermal runaway, which is beneficial to improving the heat stability of the positive electrode material; and the technical solution is low in cost and easy to implement.

According to the embodiment of the present disclosure, the olivine structural material and the ternary material are mixed in a simple mechanical and physical mixing way, so that lithium manganese iron phosphate or lithium iron phosphate with a small particle size can be mixed and distributed among lithium nickel cobalt manganate particles, and the chain reaction of the lithium nickel cobalt manganate material can be inhibited under the condition of thermal runaway, which is beneficial to improving its heat stability; and the technical solution is low in cost and easy to implement.

Fig. 1 is a schematic structural diagram of a positive electrode plate provided by an embodiment of the present disclosure.

Referring to Fig. 1, an embodiment of the present disclosure also provides a positive electrode plate 01, including the positive electrode material described in any of the above embodiments.

For example, referring to Fig. 1, the positive electrode plate 01 may include a positive electrode material 100 and a positive electrode current collector 200, and the positive electrode material 100 is located on at least one side of the positive current collector 200. In Fig. 1, it is explained that the positive electrode materials 100 are respectively provided at two sides of the positive electrode current collector 200, but it is not limited thereto.

In the positive electrode plate provided by the embodiment of the present disclosure, by mixing the second component with lower heat stability and the first component with higher heat stability in the positive electrode active substance of the positive electrode material according to a certain proportion, the heat stability of the positive electrode material can be improved, so that higher safety performance is obtained.

An embodiment of the present disclosure also includes a battery including the positive electrode plate 01 in the above embodiment. For example, the battery provided by the embodiment of the present disclosure may be a lithium ion battery, but it is not limited thereto. For example, reference may be made to the above description for parameters of the components of the positive electrode material in this battery, which is omitted here.

In the battery provided by the embodiment of the present disclosure, by mixing the first component with higher heat stability and the second component with lower heat stability in the positive electrode active substance of the positive electrode material according to a certain proportion, the heat stability of the positive electrode material can be improved, so that higher safety performance is obtained.

An embodiment of the present disclosure also includes an apparatus including the battery provided in any of the above embodiments, and the battery is configured as a power source for the apparatus.

For example, the apparatus provided by the embodiment of the present disclosure may be an automobile, such as an electric vehicle. For example, the electric vehicle can be any one of a pure electric vehicle, a hybrid electric vehicle and a plug-in hybrid electric vehicle, but it is not limited thereto. For example, the electric vehicle may be any one of an electric bus, an electric tramway, an electric bicycle, an electric motorcycle, an electric scooter, an electric golf cart and an electric truck, but it is not limited thereto. For example, the apparatus provided by the embodiment of the present disclosure may also be any one of an electric ship, an electric tool, an electronic device and an energy storage system, but it is not limited thereto.

In the apparatus provided by the embodiment of the present disclosure, by mixing the second component with lower heat stability and the first component with higher heat stability in the positive electrode active substance of the positive electrode material according to a certain proportion, the heat stability of the positive electrode material can be improved, so that higher safety performance is obtained.

At least one embodiment of the present disclosure also provides a preparation method of a positive electrode material. The preparation method includes: mixing a first component and a second component to prepare a positive electrode active substance.

For example, in a process of preparing the positive electrode material, the first component and the second component are selected according to the following conditions: the heat stability of the first component is higher than that of the second component, and the positive electrode active substance meets the following formula:

$$\alpha = \left(W_1 \times \left(\frac{448}{C1 \times U1}\right)^{\frac{1}{2}} + W_2 \times \frac{709}{C2 \times U2}\right)\left(W_1 + \frac{T \times W_2}{350}\right),$$

wherein, $\alpha$ is a characteristic parameter of the positive electrode material, $W_1$ is a mass ratio of the first component to the positive electrode active substance, $W_2$ is a mass ratio of the second component to the positive electrode active substance, C1 is a gram capacity of the first component, C2 is a gram capacity of the second component, the units of C1 and C2 are mA·h/g, U1 is a working voltage of the first component, U2 is a working voltage of the second component, the units of U1 and U2 are V, T is a temperature at an exothermic peak of the second component in differential scanning calorimetry characterization, and the unit of T is °C.

When preparing the positive electrode material, the following requirement should be met: $0.8 \leq \alpha \leq 1.03$.

In the process of preparing the positive electrode material, by reasonably selecting the first component and the second component, and mixing the first component with higher heat stability into the second component with lower heat stability, the situations of heat generation and oxygen release and the like of the battery and the probability of thermal runaway when the battery is mechanically abused can be reduced.

Therefore, the positive electrode material prepared by the preparation method can allow the battery to have higher safety performance while meeting the requirement for larger capacity, enabling the battery to have greater application potential.

For example, in some embodiments of the present disclosure, when preparing the positive electrode material, the temperature of the first component in the positive electrode active substance at the exothermic peak in differential scanning calorimetry characterization can be greater than 306°C, and the temperature of the second component at the exothermic peak in differential scanning calorimetry characterization can be less than or equal to 306°C, but it is not limited thereto.

For example, by allowing the heat stability of the second component to be lower than that of the first component, the heat resistance of the second component is lower than that of the first component. For example, the boundary between the exothermic peak temperatures of the first component and the second component may be 306°C. Therefore, by mixing the second component and the first component, the heat stability of the positive electrode material can be improved, enabling the battery to have higher safety performance.

For example, when preparing the positive electrode material, the gram capacity of the first component in the positive electrode active substance can be less than 150 mA·h/g, and the gram capacity of the second component can be greater than 150 mA·h/g, but it is not limited thereto.

For example, when preparing the positive electrode material, the energy density of the first component can be less than that of the second component, and the boundary between the gram capacitys of the first component and the second component is 150 mA·h/g. Therefore, by mixing the first component and the second component, the overall energy density of the positive electrode material can be improved, enabling the battery to have a higher energy density.

For example, when preparing the positive electrode material, a mass ratio of the positive electrode active substance to the positive electrode material can be 90wt%-98wt%. A mass ratio of the first component to the positive electrode material is 45wt%-49wt%, and a mass ratio of the second component to the positive electrode material is 45wt%-49wt%.

For example, when preparing the positive electrode material, reference may be made to relevant descriptions in the above examples for the positive electrode active substance and the mass ratios of the first component and the second component to the positive electrode active substance, which is omitted here.

For example, the preparation of the positive electrode plate provided by at least one embodiment of the present disclosure mainly includes the preparation of the positive electrode material, the preparation of the positive electrode current collector, and the like. Specifically, the preparation may include the following steps.

Step (1), arranging a positive electrode material on at least one side of a positive electrode current collector, and drying, where, for example, the positive electrode current collector 200 may be made of a metal material, such as an aluminum foil, but it is not limited thereto.

Step (2), cold pressing the dried positive electrode plate.

Step (3), slitting the cold-pressed positive electrode plate and cutting into a specified size.

It should be noted that the positive electrode current collector in the embodiment of the present disclosure may be a composite current collector including various materials, for example, the positive electrode current collector may include a supporting layer and a conductive layer. For example, the conductive layer may be located on both sides of the supporting layer, but it is not limited thereto.

For example, for the preparation of the battery provided by at least one embodiment of the present disclosure, it may also include the preparation of a negative electrode plate, an electrolyte and a separator, and the like. For example, a preparation technology of the battery may include the following steps:

(1) Preparation of positive electrode plate

For example, reference may be made to relevant descriptions in the above embodiments for the preparation method of the positive electrode plate in the battery, which is omitted here.

(2) Preparation of negative electrode plate

For example, a negative electrode plate in the battery may include a negative electrode current collector and a negative electrode material. For example, the negative electrode material may be disposed on at least one side of the negative electrode current collector. For example, the negative electrode material may include a negative electrode active substance, and components of the negative electrode active substance are not particularly limited. For example, the negative electrode active substance may include at least one of artificial graphite, natural graphite, soft carbon, hard carbon, mesocarbon microbeads, a silicon-based material, a tin-based material and lithium titanate. For example, the negative electrode current collector may also include other materials, but it is not limited thereto and can be selected according to actual needs.

(3) Preparation of electrolyte

For example, an electrolyte in the battery may include lithium salt and an organic solvent, but it is not limited thereto. For example, the lithium salt may include at least one of lithium hexafluorophosphate, lithium tetrafluoroborate and lithium perchlorate. For example, the organic solvent may include at least one of cyclic carbonate, chain carbonate and carboxylate. For example, the electrolyte may also contain functional additives, such as vinylene carbonate, ethylene sulfate, propane sultone, fluoroethylene carbonate, etc. At least one embodiment of the present disclosure does not limit the material of the electrolyte.

(4) Preparation of separator

For example, a separator of the battery may include a polyethylene membrane, but it is not limited thereto.

(5) Battery packaging

For example, when the battery is packaged, the positive electrode plate, the separator and the negative electrode plate can be stacked in turn, and the separator is located between the positive electrode plate and the negative electrode plate. Then, the stacked structure can be wound to obtain a bare battery cell. Next, the bare battery cell is placed in an outer packaging shell of the battery, and dried, and then the electrolyte is injected. Finally, after vacuum packaging, standing, forming, shaping and other processes, the battery is obtained.

In view of the battery provided by at least one embodiment of the present disclosure, its characteristics will be described in embodiments.

For example, during a battery performance test, the first component of the positive electrode active substance of the positive electrode material in the positive electrode plate of the battery may be lithium iron phosphate or lithium manganese iron phosphate, and the second component may be a ternary material.

For example, the temperature of the first component at the exothermic peak in differential scanning calorimetry characterization is 350°C. For example, the second component may be a ternary material with different nickel content. For example, the nickel content in the second component (ternary material) with a thermal runaway temperature of 264°C is 60%; for example, the nickel content in the second component (ternary material) with a thermal runaway temperature of 306°C is 30%; the nickel content in the second component (ternary material) with a thermal runaway temperature of 225°C is 80%; for example, the nickel content in the second component (ternary material) with a thermal runaway temperature of 290°C is 50%. For example, the negative electrode material in the negative electrode plate of the battery may include a graphite material (for example, artificial graphite or natural graphite). For example, the capacity of the battery may include 90A·h, 20A·h, 115A·h, 137A·h, 160A·h, etc., but it is not limited thereto.

For example, the battery with the above configuration is subjected to an acupuncture test and a hot box test respectively.

For example, a method of the acupuncture test may include: after the battery is fully charged in a CC-CV mode, using a $\varphi$ 5 mm high-temperature resistant steel needle to penetrate from a direction perpendicular to a battery plate at a speed of $25\pm5$ mm/s, and keeping the steel needle in the battery for 1 h. For example, an instrument used in the acupuncture test is an acupuncture extruder with a model of RJD-ZCJY-HLT-20T-1500D.

For example, the hot box test method may include: after the battery is fully charged in the CC-CV mode, heating up from an ambient temperature to 130°C at a rate of 2°C/min and keeping for 30 min; if the battery cell is not out of control, continuing to heat up at the rate of 2°C/min until 220°C and keeping for 30 min. For example, a hot box instrument is a thermal abuse hot box with a model of RJD-VA-1088M.

Example 1

In a positive electrode active substance of a positive electrode material included in a positive electrode plate provided in Example 1, a first component was lithium iron phosphate, a second component was a ternary material with a nickel content of 30%, a mass ratio $W_1$ of the first component to the positive electrode active substance was 10%, a temperature T at an exothermic peak of the second component in differential scanning calorimetry characterization was 306°C, a gram capacity C1 of the first component was 140 mA·h/g, a gram capacity C2 of the second component was 160 mA·h/g, a working voltage U1 of the first component was 3.2 V, a working voltage U2 of the second component was 3.73 V,

a mass ratio $W_2$ of the second component to the positive electrode active substance was 90%, a characteristic ratio $\alpha$ of the positive electrode material of the positive electrode plate of the battery was 1.027, and an energy density of the battery was 223 Wh/kg. The result of acupuncture for the battery was: no fire; the result of the hot box test for the battery was: no fire and no explosion.

Example 2

In a positive electrode material included in a positive electrode plate provided in Example 2, a first component was lithium iron phosphate, a second component was a ternary material with a nickel content of 50%, a mass ratio $W_1$ of the first component to the positive electrode active substance was 25%, a temperature T at an exothermic peak of the second component in differential scanning calorimetry characterization was 290°C, a gram capacity C1 of the first component was 140 mA·h/g, a gram capacity C2 of the second component was 180 mA·h/g, a working voltage U1 of the first component was 3.2 V, a working voltage U2 of the second component was 3.73 V, a mass ratio $W_2$ of the second component to the positive electrode active substance was 75%, a characteristic ratio $\alpha$ of the positive electrode material of the positive electrode plate of the battery was 0.913, and an energy density of the battery was 239 Wh/kg. The result of acupuncture for the battery was: no fire; the result of the hot box test for the battery was: no fire and no explosion.

Example 3

In a positive electrode material included in a positive electrode plate provided in Example 3, a first component was lithium iron phosphate, a second component was a ternary material with a nickel content of 60%, a mass ratio $W_1$ of the first component to the positive electrode active substance was 40%, a temperature T at an exothermic peak of the second component in differential scanning calorimetry characterization was 264°C, a gram capacity C1 of the first component was 140 mA·h/g, a gram capacity C2 of the second component was 190 mA·h/g, a working voltage U1 of the first component was 3.2 V, a working voltage U2 of the second component was 3.73 V, a mass ratio $W_2$ of the second component to the positive electrode active substance was 60%, a characteristic ratio $\alpha$ of the positive electrode material of the positive electrode plate of the battery was 0.848, and an energy density of the battery was 244 Wh/kg. The result of acupuncture for the battery was: no fire; the result of the hot box test for the battery was: no fire and no explosion.

Example 4

In a positive electrode material included in a positive electrode plate provided in Example 4, a first component was lithium iron phosphate, a second component was a ternary material with a nickel content of 80%, a mass ratio $W_1$ of the first component to the positive electrode active substance was 50%, a temperature T at an exothermic peak of the second component in differential scanning calorimetry characterization was 225°C, a gram capacity C1 of the first component was 140 mA·h/g, a gram capacity C2 of the second component was 200 mA·h/g, a working voltage U1 of the first component was 3.2 V, a working voltage U2 of the second component was 3.68 V, a mass ratio $W_2$ of the second component to the positive electrode active substance was 50%, a characteristic ratio $\alpha$ of the positive electrode material of the positive electrode plate of the battery was 0.806, and an energy density of the battery was 247 Wh/kg. The result of acupuncture for the battery was: no fire; the result of the hot box test for the battery was: no fire and no explosion.

Example 5

In a positive electrode material included in a positive electrode plate provided in Example 5, a first component was lithium iron phosphate, a second component was a ternary material with a nickel content of 80%, a mass ratio $W_1$ of the first component to the positive electrode active substance was 10%, a temperature T at an exothermic peak of the second component in differential scanning calorimetry characterization was 225°C, a gram capacity C1 of the first component was 140 mA·h/g, a gram capacity C2 of the second component was 200 mA·h/g, a working voltage U1 of the first component was 3.2 V, a working voltage U2 of the second component was 3.68 V, a mass ratio $W_2$ of the second component to the positive electrode active substance was 90%, a characteristic ratio $\alpha$ of the positive electrode material of the positive electrode plate of the battery was 0.656, and an energy density of the battery was 243 Wh/kg. The result of acupuncture for the battery was: fire; the result of the hot box test for the battery was: fire and explosion.

Example 6

In a positive electrode material included in a positive electrode plate provided in Example 6, a first component was lithium iron phosphate, a second component was a ternary material with a nickel content of 60%, a mass ratio $W_1$ of the first component to the positive electrode active substance was 15%, a temperature T at an exothermic peak of the second component in differential scanning calorimetry characterization was 264°C, a gram capacity C1 of the first component was 140 mA·h/g, a gram capacity C2 of the second component was 190 mA·h/g, a working voltage U1 of the first component was 3.2 V, a working voltage U2 of the second component was 3.73 V, a mass ratio $W_2$ of the second component to the positive electrode active substance was 85%, a characteristic ratio $\alpha$ of the positive electrode material of the positive electrode plate of the battery was 0.791, and an energy density of the battery was 235 Wh/kg. The result of acupuncture for the battery was: fire; the result of the hot box test for the battery was: fire and explosion.

Example 7

In a positive electrode material included in a positive electrode plate provided in Example 7, a first component was lithium manganese iron phosphate, a second component was a ternary material with a nickel content of 30%, a mass ratio $W_1$ of the first component to the positive electrode active substance was 5%, a temperature T at an exothermic peak of the second component in differential scanning calorimetry characterization was 306°C, a gram capacity C1 of the first component was 145 mA·h/g, a gram capacity C2 of the second component was 160 mA·h/g, a working voltage U1 of the first component was 4 V, a working voltage U2 of the second component was 3.73 V, a mass ratio $W_2$ of the second component to the positive electrode active substance was 95%, a characteristic ratio $\alpha$ of the positive electrode material of the positive electrode plate of the battery was 1.033, and an energy density of the battery was 225 Wh/kg. The result of acupuncture for the battery was: no fire; the result of the hot box test for the battery was: fire and explosion.

Example 8

In a positive electrode material included in a positive electrode plate provided in Example 8, a first component was lithium manganese iron phosphate, a second component was a ternary material with a nickel content of 80%, a mass ratio $W_1$ of the first component to the positive electrode active substance was 15%, a temperature T at an exothermic peak of the second component in differential scanning calorimetry characterization was 225°C, a gram capacity C1 of the first component was 145 mA·h/g, a gram capacity C2 of the second component was 200 mA·h/g, a working voltage U1 of the first component was 4 V, a working voltage U2 of the second component was 3.68 V, a mass ratio $W_2$ of the second component to the positive electrode active substance was 85%, a characteristic ratio $\alpha$ of the positive electrode material of the positive electrode plate of the battery was 0.663, and an energy density of the battery was 248 Wh/kg. The result of acupuncture for the battery was: fire; the result of the hot box test for the battery was: fire and explosion.

Example 9

In a positive electrode material included in a positive electrode plate provided in Example 9, a first component was lithium manganese iron phosphate, a second component was a ternary material with a nickel content of 60%, a mass ratio $W_1$ of the first component to the positive electrode active substance was 40%, a temperature T at an exothermic peak of the second component in differential scanning calorimetry characterization was 264°C, a gram capacity C1 of the first component was 145 mA·h/g, a gram capacity C2 of the second component was 190 mA·h/g, a working voltage U1 of the first component was 4 V, a working voltage U2 of the second component was 3.73 V, a mass ratio $W_2$ of the second component to the positive electrode active substance was 60%, a characteristic ratio $\alpha$ of the positive electrode material of the positive electrode plate of the battery was 0.81, and an energy density of the battery was 250 Wh/kg. The result of acupuncture for the battery was: no fire; the result of the hot box test for the battery was: no fire and no explosion.

Table 1 shows corresponding parameters and test results in Examples 1-9.

Table 1

| Embodiments No. | T(°C) | $W_1$ | $C_1$ (mA·h/g) | $U_1$(V) | W2 | $C_2$ (mA·h/g) | $U_2$(V) | $\alpha$ | Acupuncture result | Hot box result | Energy density (Wh/Kg) |
|---|---|---|---|---|---|---|---|---|---|---|---|
| 1 | 306 | 10% | 140 | 3.2 | 90% | 160 | 3.73 | 1.027 | No fire | No fire No explosion | 223 |
| 2 | 290 | 25% | 140 | 3.2 | 75% | 180 | 3.73 | 0.913 | No fire | No fire, no explosion | 239 |
| 3 | 264 | 40% | 140 | 3.2 | 60% | 190 | 3.73 | 0.848 | No fire | No fire, no explosion | 244 |

(continued)

| Embod iments No. | T(°C) | $W_1$ | $C_1$ (mA·h /g) | $U_1(V)$ | W2 | $C_2$ (mA·h/ g) | $U_2(V)$ | $\alpha$ | Acupuncture result | Hot box result | Energy density (Wh/Kg) |
|---|---|---|---|---|---|---|---|---|---|---|---|
| 4 | 225 | 50% | 140 | 3.2 | 50% | 200 | 3.68 | 0.806 | No fire | No fire, no explosion | 247 |
| 5 | 225 | 10% | 140 | 3.2 | 90% | 200 | 3.68 | 0.656 | Fire | Fire, explosion | 243 |
| 6 | 264 | 15% | 140 | 3.2 | 85% | 190 | 3.73 | 0.791 | Fire | Fire, explosion | 235 |
| 7 | 306 | 5% | 145 | 4 | 95% | 160 | 3.73 | 1.033 | No fire | Fire, explosion | 225 |
| 8 | 225 | 15% | 145 | 4 | 85% | 200 | 3.68 | 0.663 | Fire | Fire, explosion | 248 |
| 9 | 264 | 40% | 145 | 4 | 60% | 190 | 3.73 | 0.81 | No fire | No fire, no explosion | 250 |

For example, according to Table 1, when the positive electrode material meets the following formula:

$$\alpha = \left(W_1 \times \left(\frac{448}{C1 \times U1}\right)^{\frac{1}{2}} + W_2 \times \frac{709}{C2 \times U2}\right)\left(W_1 + \frac{T \times W_2}{350}\right), \text{ and } 0.8 \leq \alpha \leq 1.03,$$

the battery provided with the positive electrode material can pass the acupuncture test and the hot box test, that is, the result of the battery in the acupuncture test is: no fire, and the result of the hot box test is: no fire and no explosion.

As shown in Table 1, for the second component in the positive electrode active substance of the positive electrode material, when the nickel content is different, the corresponding gram capacity of the second component is different. For example, when lithium iron phosphate is used as the first component, the corresponding gram capacity is 140 mA·h/g. For example, when lithium manganese iron phosphate is used as the first component, the corresponding gram capacity is 145 mA·h/g. As in Examples 5-6 and Example 8 in Table 1, when $\alpha$ is less than 0.8, the battery fails to pass the acupuncture test and the hot box test.

As in Examples 1-4 and Examples 7 and 9 in Table 1, the batteries all pass the acupuncture test and the hot box test. Here, it should be noted that in the embodiment of the present disclosure, a numerical range satisfied by $\alpha$ in the positive electrode material may have a certain fluctuation range, for example, the fluctuation range may be 0.5% to 0.1%, but it is not limited thereto. Meanwhile, the energy density of the battery can be kept at a high level when the battery passes the acupuncture test and the hot box test. For example, according to Examples 1-4, and Examples 7 and 9, the energy density of the battery is greater than 220 Wh/Kg.

Therefore, the positive electrode material provided by the embodiment of the present disclosure can allow the battery to have higher safety performance while meeting the requirement for larger capacity, enabling the battery to have greater application potential.

Features in the same embodiment and different embodiments of the present disclosure can be combined with each other without conflict.

The foregoing descriptions are merely specific implementations of the present disclosure, but the protection scope of the present disclosure is not limited thereto. Any variation or replacement readily figured out by a person skilled in the art within the technical scope disclosed in the present disclosure shall cover within the protection scope of the present disclosure. Therefore, the scope of protection of the present disclosure shall be subject to the scope of protection of the appended claims.

## Claims

1. A positive electrode material, comprising a positive electrode active substance, wherein the positive electrode active substance comprises a first component and a second component, the heat stability of the first component is higher than the heat stability of the second component, and the positive electrode material meets the following formula:

EP 4 583 197 A1

$$\alpha = \left( W_1 \times \left( \frac{448}{C1 \times U1} \right)^{\frac{1}{2}} + W_2 \times \frac{709}{C2 \times U2} \right)\left( W_1 + \frac{T \times W_2}{350} \right),$$

wherein, $\alpha$ is a characteristic parameter of the positive electrode material, $W_1$ is a mass ratio of the first component to the positive electrode active substance, $W_2$ is a mass ratio of the second component to the positive electrode active substance, C1 is a gram capacity of the first component, C2 is a gram capacity of the second component, the units of C1 and C2 are mA·h/g, U1 is a working voltage of the first component, U2 is a working voltage of the second component, the units of U1 and U2 are V, T is a temperature at an exothermic peak of the second component in differential scanning calorimetry characterization, and the unit of T is °C, wherein, $0.8 \leq \alpha \leq 1.03$.

2. The positive electrode material according to claim 1, wherein
the temperature of the first component at the exothermic peak in differential scanning calorimetry characterization is greater than 306°C, and the temperature of the second component at the exothermic peak in differential scanning calorimetry characterization is less than or equal to 306°C.

3. The positive electrode material according to claim 1 or 2, wherein the gram capacity of the first component is less than 150 mA·h/g, and the gram capacity of the second component is greater than or equal to 150 mA·h/g.

4. The positive electrode material according to any one of claims 1-3, wherein

the first component comprises at least one of an olivine material or a spinel material; and
the second component comprises a layered structure material, and the layered structure material comprises at least one of a ternary material, lithium cobalt oxides or lithium nickelate.

5. The positive electrode material according to any one of claims 1-4, wherein the first component comprises at least one of lithium iron phosphate, lithium manganese iron phosphate or lithium manganate.

6. The positive electrode material according to any one of claims 1-5, wherein a mass ratio of the positive electrode active substance to the positive electrode material is 90wt%-98wt%,

a mass ratio of the first component to the positive electrode material is 45wt%-49wt%, and a
mass ratio of the second component to the positive electrode material is 45wt%-49wt%.

7. The positive electrode material according to any one of claims 1-6, the positive electrode material further comprises a positive electrode conductive agent and a positive electrode binder, wherein

a mass ratio of the positive electrode conductive agent to the positive electrode material is 1wt%-5wt%; and
a mass ratio of the positive electrode binder to the positive electrode material is 1wt%-5wt%.

8. The positive electrode material according to any one of claims 1-7, wherein the first component comprises $LiMn_xFe_{(1-x)}PO_4$, and $0 \leq x \leq 0.6$,
the gram capacity C1 of the first component is 140 mA·h/g to 160 mA·h/g, and the working voltage U1 of the first component is 3.2 V or 4.0 V.

9. The positive electrode material according to any one claims 1-8, wherein the second component comprises $LiNi_zMn_yCo_{(1-z-y)}O_2$, and $0<z<1$, $0<y<1$, $0<1-z-y<1$; and
the gram capacity C2 of the second component is 150 mA·h/g to 220 mA·h/g, and the working voltage U2 of the second component is 3.6 V to 3.75 V.

10. A positive electrode plate comprising the positive electrode material according to any one of claims 1-9.

11. A battery comprising the positive electrode plate according to claim 10.

12. An apparatus comprising the battery according to claim 11, wherein the battery is configured as a power source for the apparatus.

13. A preparation method of a positive electrode material, comprising:

13

mixing the first component and the second component to prepare a positive electrode active substance, wherein the heat stability of the first component is higher than the heat stability of the second component, and the positive electrode active substance meets the following formula:

$$\alpha = \ \left(W_1 \times \ \left(\frac{448}{C1 \times U1}\right)^{\frac{1}{2}} + W_2 \times \frac{709}{C2 \times U2}\right)\left(W_1 + \frac{T \times W_2}{350}\right),$$

wherein, $\alpha$ is a characteristic parameter of the positive electrode material, $W_1$ is a mass ratio of the first component to the positive electrode active substance, $W_2$ is a mass ratio of the second component to the positive electrode active substance, C1 is a gram capacity of the first component, C2 is a gram capacity of the second component, the units of C1 and C2 are mA·h/g, U1 is a working voltage of the first component, U2 is a working voltage of the second component, the units of U1 and U2 are V, T is a temperature at an exothermic peak of the second component in differential scanning calorimetry characterization, and the unit of T is °C, wherein, $0.8 \leq \alpha \leq 1.03$.

14. The preparation method of the positive electrode material according to claim 13, wherein
the temperature of the first component at the exothermic peak in differential scanning calorimetry characterization is greater than 306°C, and the temperature of the second component at the exothermic peak in differential scanning calorimetry characterization is less than or equal to 306°C.

15. The preparation method of the positive electrode material according to claim 13 or 14, wherein the gram capacity of the first component is less than 150 mA·h/g, and the gram capacity of the second component is greater than or equal to 150 mA·h/g.

16. The preparation method of the positive electrode material according to any one of claims 13-15, wherein a mass ratio of the positive electrode active substance to the positive electrode material is 90wt%-98wt%,
a mass ratio of the first component to the positive electrode material is 45wt%-49wt%, and a mass ratio of the second component to the positive electrode material is 45wt%-49wt%.

01

100
200
100

Fig. 1

## INTERNATIONAL SEARCH REPORT

International application No.

**PCT/CN2023/134282**

| A. | CLASSIFICATION OF SUBJECT MATTER |
|---|---|

H01M4/36(2006.01)i; H01M4/136(2010.01)i; H01M4/525(2010.01)i; H01M4/58(2010.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; ISI: 兰钧新能源科技, 正极, 第一, 第二, 热稳定性, 质量比, 克容量, 橄榄石, 尖晶石, 层状结构, 磷酸铁锂, 磷酸锰铁锂, 锰酸锂, 钴酸锂, 镍酸锂, 差示扫描量热法, LiFePO4, Li+Fe+Mn+PO4, LiMn2O4, LiCoO2, LiNiO2, cathode, first, second, thermal stability, mass ratio, Gram capacity, olivine, spinel, lithium iron phosphate, lithium manganese iron phosphate, lithium manganese oxide, layered structure, ternary material, lithium cobaltate, lithium nickelate, DSC

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| PX | CN 115692678 A (SHANGHAI LANJUN NEW ENERGY TECHNOLOGY CO., LTD.) 03 February 2023 (2023-02-03)<br>　　description, paragraphs [0003]-[0138] | 1-16 |
| X | CN 115312762 A (SHANGHAI LANJUN NEW ENERGY TECHNOLOGY CO., LTD.) 08 November 2022 (2022-11-08)<br>　　description, paragraphs [0002]-[0069] | 1-16 |
| X | CN 101295780 A (SHENZHEN BAK BATTERY CO., LTD.) 29 October 2008 (2008-10-29)<br>　　description, page 2, paragraph 2 to page 10, paragraph 1 | 1-16 |
| A | CN 112447964 A (NINGDE CONTEMPORARY AMPEREX TECHNOLOGY CO., LTD.) 05 March 2021 (2021-03-05)<br>　　entire document | 1-16 |

| ☑ Further documents are listed in the continuation of Box C. | ☑ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 January 2024** | **04 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/134282**

| C. | DOCUMENTS CONSIDERED TO BE RELEVANT | |
|---|---|---|
| Category* | Citation of document, with indication, where appropriate, of the relevant passages | Relevant to claim No. |
| A | CN 115377358 A (SUNWODA ELECTRIC VEHICLE BATTERY CO., LTD.) 22 November 2022 (2022-11-22)<br>entire document | 1-16 |

Form PCT/ISA/210 (second sheet) (July 2022)

## INTERNATIONAL SEARCH REPORT
### Information on patent family members

International application No.

**PCT/CN2023/134282**

| Patent document cited in search report | | | Publication date (day/month/year) | Patent family member(s) | | | Publication date (day/month/year) |
|---|---|---|---|---|---|---|---|
| CN | 115692678 | A | 03 February 2023 | None | | | |
| CN | 115312762 | A | 08 November 2022 | None | | | |
| CN | 101295780 | A | 29 October 2008 | CN | 101295780 | B | 10 August 2011 |
| CN | 112447964 | A | 05 March 2021 | WO | 2021042990 | A1 | 11 March 2021 |
| | | | | IN | 202127057110 | A | 17 December 2021 |
| | | | | EP | 3951949 | A1 | 09 February 2022 |
| | | | | CN | 112447964 | B | 19 April 2022 |
| | | | | KR | 20220049021 | A | 20 April 2022 |
| | | | | US | 2022185696 | A1 | 16 June 2022 |
| | | | | EP | 3951949 | A4 | 29 June 2022 |
| | | | | JP | 2022537081 | A | 23 August 2022 |
| | | | | JP | 7223207 | B2 | 15 February 2023 |
| | | | | US | 11613474 | B2 | 28 March 2023 |
| | | | | US | 2023202864 | A1 | 29 June 2023 |
| | | | | US | 11760657 | B2 | 19 September 2023 |
| CN | 115377358 | A | 22 November 2022 | None | | | |

Form PCT/ISA/210 (patent family annex) (July 2022)

**EP 4 583 197 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211505245